# EUROPÄISCHE PATENTSCHRIFT

(11) **EP 0 842 221 B1**
(45) Veröffentlichungstag und Bekanntmachung des Hinweises auf die Patenterteilung: **31.01.2001**
(21) Anmeldenummer: 96927572.6
(22) Anmeldetag: 22.07.1996
(51) Int. Cl.: C08L 23/04

(54) **THERMOPLASTISCHE FORMMASSEN AUF DER BASIS VON ETHYLENPOLYMERISATEN UND THERMOPLASTISCHEN POLYESTERN**
THERMOPLASTIC MOULDING COMPOUNDS BASED ON ETHYLENE POLYMERS AND TERMOPLASTIC POLYESTERS
MATIERES MOULABLES THERMOPLASTIQUES A BASE DE POLYMERES D'ETHYLENE ET DE POLYESTERS THERMOPLASTIQUES

(30) Priorität: 04.08.1995 DE 19528647
(43) Veröffentlichungstag der Anmeldung: 20.05.1998
(73) Patentinhaber: BASF AKTIENGESELLSCHAFT, 67056 Ludwigshafen (DE)
(72) Erfinder: BAUER, Peter, D-67071 Ludwigshafen (DE); SEELIGER, Ursula, D-67059 Ludwigshafen (DE); FALLER, Uwe, D-67227 Frankenthal (DE)
(86) Internationale Anmeldenummer: EP9603225
(87) Internationale Veröffentlichungsnummer: WO9706210

(56) Entgegenhaltungen:
- WO-A-93/08231
- US-A- 4 340 528

## Beschreibung

Die Erfindung betrifft thermoplastische Formmassen, enthaltend als wesentliche Komponenten
A) 95 bis 99,99 Gew.-% eines Ethylenpolymerisats und
B) 0,01 bis 5 Gew.-% eines thermoplastischen Polyesters mit einem Schmelzmaximum von kleiner als oder gleich 150°C.

Außerdem betrifft die vorliegende Erfindung Verfahren zur Herstellung dieser thermoplastischen Formmassen, ihre Verwendung zur Herstellung von Fasern, Folien und Formkörpern sowie die hierbei erhältlichen Fasern, Folien und Formkörper aus den thermoplastischen Formmassen.

Zur Verbesserung der Verarbeitbarkeit von Ethylenpolymerisaten ist es bekannt, geringe Mengen an Fluor enthaltenden Polymeren wie Polyvinylidenfluoride beizumischen. Nachteilig hierbei ist jedoch, daß im Endprodukt Fluor enthalten ist und die Fluorelastomeren als Partikel im Fertigteil vorliegen und beispielsweise beim Bedrucken stören.

Aufgabe der vorliegenden Erfindung war es daher, thermoplastische Formmassen auf der Basis von Ethylenpolymerisaten zur Verfügung zu stellen, die die genannten Nachteile nicht aufweisen und eine gute Verarbeitbarkeit sowie gute Oberflächeneigenschaften zeigen.

Demgemäß wurden die eingangs definierten thermoplastischen Formmassen gefunden.

Weiterhin wurden Verfahren zu deren Herstellung gefunden, ihre Verwendung zur Herstellung von Fasern, Folien und Formkörper sowie die hierbei erhältlichen Fasern, Folien und Formkörper.

Als Komponente A) enthalten die erfindungsgemäßen thermoplastischen Formmassen 95 bis 99,99 Gew.-%, vorzugsweise 97 bis 99,95 Gew.-%, insbesondere 99 bis 99,9 Gew.-% eines Ethylenpolymerisats. Darunter werden Homo- oder Copolymerisate des Ethylens verstanden, wobei als Comonomere vorzugsweise Propylen, Butene, Pentene auch 4-Methylpenten-1 und Hexene verwendet werden. Aber auch höhere Alkene, insbesondere Alk-1-ene wie Oct-1-en lassen sich als Monomere zu Copolymerisaten einsetzen. Es können auch Mischungen verschiedener Ethylenpolymerisate eingesetzt werden. Ein Teil der Mischungen kann auch aus radikalisch polymerisierten Polyolefinen mit polaren Comonomeren bestehen.

Hinsichtlich der Dichte der Ethylenpolymerisate gibt es praktisch keine Einschränkungen, sie kann in weiten Bereichen schwanken, beispielsweise im Bereich von 0,860 g/cm³ bis 0,970 g/cm³. Besonders bevorzugt sind Ethylenpolymerisate mit sehr niedriger Dichte (PE-ULD), die im allgemeinen im Bereich von 0,880 g/cm³ bis 0,910 g/cm³ liegt, Ethylenpolymerisate mit niedriger Dichte (PE-LD), die im allgemeinen im Bereich von 0,910 g/cm³ bis 0,935 g/cm³ liegt und Ethylenpolymerisate mit mittlerer und höherer Dichte.

Auch die Molekulargewichtsverteilung (M_{w}/Mₙ) der eingesetzten Ethylenpolymerisate kann in weiten Bereichen schwanken, beispielsweise im Bereich von kleiner als 2 bis größer als 30, bevorzugt ist M_{w}/Mₙ kleiner als 16.

Ebenso können die Schmelzindices (MFR) der eingesetzten Ethylenpolymerisate in weiten Bereichen schwanken, beispielsweise im Bereich von kleiner als 0,01 g/10 min bis 80 g/10 min (190/2,16).

Auch hinsichtlich der Verfahren zur Herstellung der Ethylenpolymerisate gibt es praktisch keine Einschränkung, bevorzugt werden sie mit Ziegler-, Phillips- oder Metallocen-Katalysatorsystemen hergestellt.

Als Komponente B) enthalten die erfindungsgemäßen thermoplastischen Formmassen 0,01 bis 5 Gew.-%, vorzugsweise 0,05 bis 3 Gew.-%, insbesondere 0,1 bis 1 Gew.-% eines thermoplastischen Polyesters mit einem Schmelzmaximum von kleiner als oder gleich 150°C.

Bevorzugt werden als Komponente B) Polyester eingesetzt, die erhältlich sind durch Reaktion einer Mischung, enthaltend als wesentliche Komponenten
B1) 30 bis 60 Gew.-%, vorzugsweise 32 bis 55 Gew.-% einer Mischung, enthaltend als wesentliche Komponenten
   B11) 30 bis 70 Gew.-%, vorzugsweise 35 bis 60 Gew.-% Adipinsäure oder esterbildende Derivate davon, insbesondere Di-C₁-C₆-alkylester wie Dimethyl-, Diethyl-, Dipropyl-, Dibutyl-, Dipentyl- oder Dihexyladipat oder deren Mischungen, vorzugsweise Adipinsäure oder Dimethyladipat oder Mischungen davon,
   B12) 30 bis 70 Gew.-%, vorzugsweise 35 bis 60 Gew.-% Terephthalsäure oder esterbildende Derivate davon, insbesondere Di-C₁-C₆-alkylester wie Dimethyl-, Diethyl-, Dipropyl-, Dibutyl-, Dipentyl- oder Dihexylterephthalat oder deren Mischungen, vorzugsweise Terephthalsäure oder Dimethylterephthalat oder Mischungen davon,
      und
   B13) 0 bis 5 Gew.-%, vorzugsweise 0,01 bis 3 Gew.-% einer Verbindung mit mindestens drei, vorzugsweise drei bis zehn, insbesondere drei bis sechs zur Esterbildung befähigte Gruppen, vorzugsweise Hydroxyl- und/oder Carboxylgruppen,
B2) 40 bis 70 Gew.-%, vorzugsweise 42 bis 65 Gew.-% einer Dihydroxyverbindung mit 2 bis 10 C-Atomen, vorzugsweise C₂-bis C₆-Alkandiole oder C₅- bis C₁₀-Cycloalkandiole sowie deren Mischungen
   und
B3) 0 bis 5 Gew.-%, vorzugsweise 0,01 bis 3 Gew.-% Diisocyanate, Divinylether, 2,2'-Bisoxazoline oder deren Mischungen.

Die Gew.-% der Komponenten B11), B12) und B13) beziehen sich auf B1); Gew.-% ist so zu verstehen, daß sich die Summe der Gew.-% der eingesetzten Komponenten zu 100 ergibt.

Beispiele für bevorzugte Komponenten B13) sind
Weinsäure, Citronensäure, Äpfelsäure;
Trimethylolpropan, Trimethylolethan;
Pentaerythrit;
Polyethertriole;
Glycerin;
Trimesinsäure;
Trimellitsäure, -anhydrid;
Pyromellitsäure, -dianhydrid und
Hydroxyisophthalsäure.

Beispiele für bevorzugte Komponenten B2) sind Ethylenglykol, 1,2-, 1,3-Propandiol, 1,2-, 1,4-Butandiol, 1,5-Pentandiol oder 1,6-Hexandiol, insbesondere Ethylenglykol, 1,3-Propandiol und 1,4-Butandiol, Cyclopentandiol, 1,4-Cyclohexandiol, 1,2-Cyclohexandimethanol, 1,4-Cyclohexandimethanol, sowie Mischungen daraus.

Als Diisocyanate (B3)) können übliche und kommerziell erhältliche Diisocyanate eingesetzt werden. Bevorzugt setzt man ein Diisocyanat ein, das ausgewählt ist aus der Gruppe, bestehend aus Toluylen-2,4-diisocyanat, Toluylen-2,6-diisocyanat, 4,4'- und 2,4'-Diphenylmethandiisocyanat, Naphthylen-1,5-diisocyanat, Xylylen-diisocyanat, Hexamethylendiisocyanat, Isophorondiisocyanat und Methylen-bis(4-isocyanatocyclohexan), besonders bevorzugt Hexamethylendiisocyanat.

Prinzipiell kann man auch trifunktionelle Isocyanat-Verbindungen, die Isocyanurat- und/oder Biuretgruppen mit einer Funktionalität nicht kleiner als drei enthalten können, einsetzen oder die Diisocyanat-Verbindungen B3) partiell durch Tri- oder Polyisocyanate ersetzen.

Als Divinylether (B3)) können alle üblichen und kommerziell erhältlichen Divinylether eingesetzt werden. Bevorzugt setzt man Divinylether ein, die ausgewählt sind aus der Gruppe, bestehend aus 1,4-Butandiol-Divinylether, l,6-Hexandiol-Divinylether, 1,4-Cyclohexandimethanol-Divinylether.

Als 2,2'-Bisoxazoline (B3)) können Verbindungen der Formel 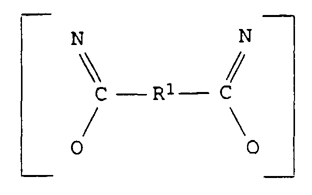 eingesetzt werden, in der
- R¹: eine Einfachbindung, eine (CH₂)_{q}-Alkylengruppe mit q=2, 3 oder 4 bedeutet oder eine Phenylengruppe.

Es ist auch möglich solche Polyester B) einzusetzen, bei denen ein Teil der Komponenten Bll) und/oder B12) durch Aminocarbonsäuren wie Glycin, Asparaginsäure, Glutaminsäure, Alanin, Valin, Leucin oder Isoleucin sowie darauf zugängliche Oligo- oder Polymere wie Polyasparaginsäureimide oder Polyglutaminsäureimide, bevorzugt Glycin, ersetzt wurde. Statt Aminocarbonsäuren können auch Polyamide mit einem Molekulargewicht von höchstens 18.000 g/mol, beispielsweise Polyamid-46, Polyamid-66 oder Polyamid-610 eingesetzt werden.

Besonders bevorzugt sind Polyester B), bei denen entweder die Menge an B13) größer als 0 Gew.-% ist oder die Menge an B3) größer als 0 Gew.-% ist oder sowohl die Menge an B13) als auch die Mengen an B3) größer 0 Gew.-% ist.

Bevorzugt weisen die Polyester B) Schmelzmaxima im Bereich von 40 bis 150°C, besonders bevorzugt 60 bis 140°C, insbesondere 80 bis 130°C auf.

Die Molekulargewichte Mₙ (Zahlenmittelwerte) der Polyester B) können im Bereich von 2.000 bis 100.000, vorzugsweise 4.000 bis 80.000, insbesondere 5.000 bis 50.000 liegen.

Verfahren zur Herstellung der Polyester B) sind an sich unkritisch. Man kann alle Komponenten gemeinsam zur Reaktion bringen oder teilweise die Komponenten vormischen. Grundsätzliche Verfahren sind beispielsweise im Kunststoff-Handbuch, Band 3/1 (1992), Seiten 15 bis 23, Carl Hanser Verlag, München, beschrieben.

So kann man beispielsweise die Umsetzung von Dimethylestern der Komponente B1) mit der Komponente B2) ("Umesterung") bei Temperaturen im Bereich von 160 bis 230°C in der Schmelze bei Atmosphärendruck vorteilhaft unter Inertgasatmosphäre durchführen.

Vorteilhaft wird bei der Herstellung der Polyester B) ein molarer Überschuß der Komponente B2), bezogen auf die Komponente B1), verwendet, beispielsweise bis zum 2 1/2fachen, bevorzugt bis zum 1,67fachen.

Üblicherweise erfolgt die Herstellung der Polyester B) unter Zugabe von geeigneten, an sich bekannten Katalysatoren wie Metallverbindungen auf der Basis folgender Elemente wie Ti, Ge, Zn, Fe, Mn, Co, Zr, V, Ir, La, Ce, Li, und Ca, bevorzugt metallorganische Verbindungen auf der Basis dieser Metalle wie Salze organischer Säuren, Alkoxide, Acetylacetonate und ähnliches, insbesondere bevorzugt auf Basis von Zink, Zinn und Titan.

Bei Verwendung von Dicarbonsäuren oder deren Anhydride als Komponente B1) kann deren Veresterung mit Komponente B2) vor, gleichzeitig oder nach der Umesterung stattfinden. In einer bevorzugten Ausführungsform verwendet man das in der DE-A 23 26 026 beschriebene Verfahren zur Herstellung modifizierter Polyalkylenterephthalate.

Nach der Umsetzung der Komponenten B1) und B2) wird in der Regel unter vermindertem Druck oder in einem Inertgasstrom, beispielsweise aus Stickstoff, bei weiterem Erhitzen auf eine Temperatur im Bereich von 180 bis 260°C die Polykondensation bis zum gewünschten Molekulargewicht durchgeführt und die Komponente B3) zugesetzt.

Um unerwünschte Abbau- und/oder Nebenreaktionen zu vermeiden, kann man in dieser Verfahrensstufe gewünschtenfalls auch Stabilisatoren zusetzen. Solche Stabilisatoren sind beispielsweise die in der EP-A 13 461, US 4,328,049 oder in B. Fortunato et al., Polymer Vol. 35, Nr. 18, S. 4006 bis 4010, 1994, Butterworth-Heinemann Ltd., beschriebenen Phosphor-Verbindungen. Diese können zum Teil auch als Deaktivatoren der oben beschriebenen Katalysatoren wirken. Beispielhaft seien genannt: Organophosphite, phosphonige Säure und phosphorige Säure. Als Verbindungen, die nur als Stabilisatoren wirken seien beispielhaft genannt: Trialkylphosphite, Triphenylphosphit, Trialkylphosphate, Triphenylphosphat und Tocopherol (Vitamin E; beispielsweise als Uvinul® 2003AO (BASF) erhältlich).

Das Gewichtsverhältnis von Katalysator zu Polyester B) liegt üblicherweise im Bereich von 0,01:100 bis 3:100, vorzugsweise von 0,05:100 bis 2:100, wobei bei hochaktiven Titanverbindungen auch kleinere Mengen eingesetzt werden können wie 0,0001:100.

Der Katalysator kann gleich zu Beginn der Reaktion, unmittelbar kurz vor der Abtrennung des überschüssigen Diols oder gewünschtenfalls auch in mehreren Portionen verteilt während der Herstellung der Polyester B) eingesetzt werden. Gewünschtenfalls können auch verschiedene Katalysatoren oder auch Gemische davon eingesetzt werden.

Eine besonders bevorzugte Herstellung der Polyester B) erfolgt so, daß man zuerst ein Präpolymer aus der Komponente Bll) und der Komponente B2) herstellt und dieses anschließend mit der Komponente B12) und weiterem B2) und der Komponente B13) umsetzt und anschließend B3) zugibt. Bei der Herstellung des Präpolymeren werden vorzugsweise Wasser und der Überschuß an B2) sowie beispielsweise Methanol abdestilliert.

Die Herstellung der erfindungsgemäßen thermoplastischen Formmassen ist an sich unkritisch. Vorzugsweise mischt man die beiden Komponenten A) und B) bei Temperaturen im Bereich von 100 bis 350°C, insbesondere 150 bis 260°C.

Die erfindungsgemäßen thermoplastischen Formmassen eignen sich zur Herstellung von Fasern, Folien und Formkörpern, insbesondere von Folien, Profilen und Hohlkörpern. Sie weisen insbesondere eine gute Verarbeitbarkeit und gute Oberflächeneigenschaften auf.

### Beispiele

Es wurden folgende Komponenten eingesetzt:
PE1: Ein Ethylencopolymerisat mit 7 Gew.-% But-1-en mit einer Molekulargewichtsverteilung M_{w}/Mₙ von 4 (M_{w} ≙ Gewichtsmittelwert, Mₙ ≙ Zahlenmittelwert), einem Schmelzindex MFR (190/2,16) von 1 g/10 min und einer Dichte von 0,920 g/cm³.
PE2: Ein Ethylencopolymerisat mit 10 Gew.-% But-1-en mit einer Molekulargewichtsverteilung von 2, einem Schmelzindex von 1,8 g/10 min und einer Dichte von 0,902 g/cm³.
PE3: Ein Ethylencopolymerisat mit 1,5 Gew.-% Hex-1-en mit einer Molekulargewichtsverteilung von 15, einem Schmelzindex (190/21,6) von 6 g/10 min und einer Dichte von 0,946 g/cm³.
B: Ein Polyester, der folgendermaßen hergestellt wurde:
Präpolymer:
4.672 kg 1,4-Butandiol, 7.000 kg Adipinsäure und 50 g Zinndioctoat wurden unter Stickstoffatmosphäre auf 240°C erhitzt. Nachdem die Hauptmenge des bei der Umsetzung entstandenen Wassers abdestilliert war, wurden 10 g Titantetrabutylat zugesetzt. Nachdem die Säurezahl SZ einen Wert kleiner als 1 erreicht hatte, wurde unter reduziertem Druck der Überschuß an Butandiol abdestilliert, bis eine OH-Zahl von 56 erreicht war.
1,81 kg dieses Präpolymeren, 1,17 kg Dimethylterephthalat, 1,7 kg 1,4-Butandiol und 4,7 g Titantetrabutylat wurden unter Stickstoffatmosphäre und Rühren auf 180°C erhitzt. Dabei wurde das bei der Umesterungsreaktion gebildete Methanol abdestilliert.
Innerhalb von 2 Stunden wurde unter Erhöhung der Rührgeschwindigkeit auf 230°C erhitzt, 6,54 g Pyromellitsäuredianhydrid zugegeben und nach einer weiteren Stunde noch 0,4 g 50 %ige wäßrige phosphorige Säure. Nach Beendigung der Umsetzung wurde die Schmelze unter Rühren und unter Stickstoffatmosphäre auf 200°C abgekühlt. Dann erfolgte die Zugabe
von 15 g Hexamethylendiisocyanat in 4 Portionen innerhalb von 40 Minuten. Der entstandene Polyester konnte granuliert werden.

| | |
|---|---|
| OH-Zahl = | 2 mg KOH/g |
| SZ = | 5,5 mg KOH/g |
| Mₙ = | 14.320 |
| M_{w} = | 98.350 (GPC) |
| Schmelzpunkt Tₘ = | 98°C |
| Glasübergangstemperatur Tg = | -31°C (DSC, von 190°C schnell abgekühlt) |

### Beispiele 1 bis 12

### Herstellung von Folien

PE1 und PE2 wurden mit verschiedenen Mengen an B als Granulatmischung bei verschiedenen Massetemperaturen gemischt und zu Blasfolien extrudiert. Man erhielt stets eine transparente, schmelzbruchfreie Folie.

### Vergleichsbeispiele V1 bis V5

Es wurde analog zu den Beispielen 1 bis 12 gearbeitet, jedoch ohne den Zusatz des Polyesters B.

Man erhielt stets eine Folie mit starkem Schmelzbruch.

Die Versuchsparameter und die eingesetzten Stoffe sind in der Tabelle 1 zusammengestellt.

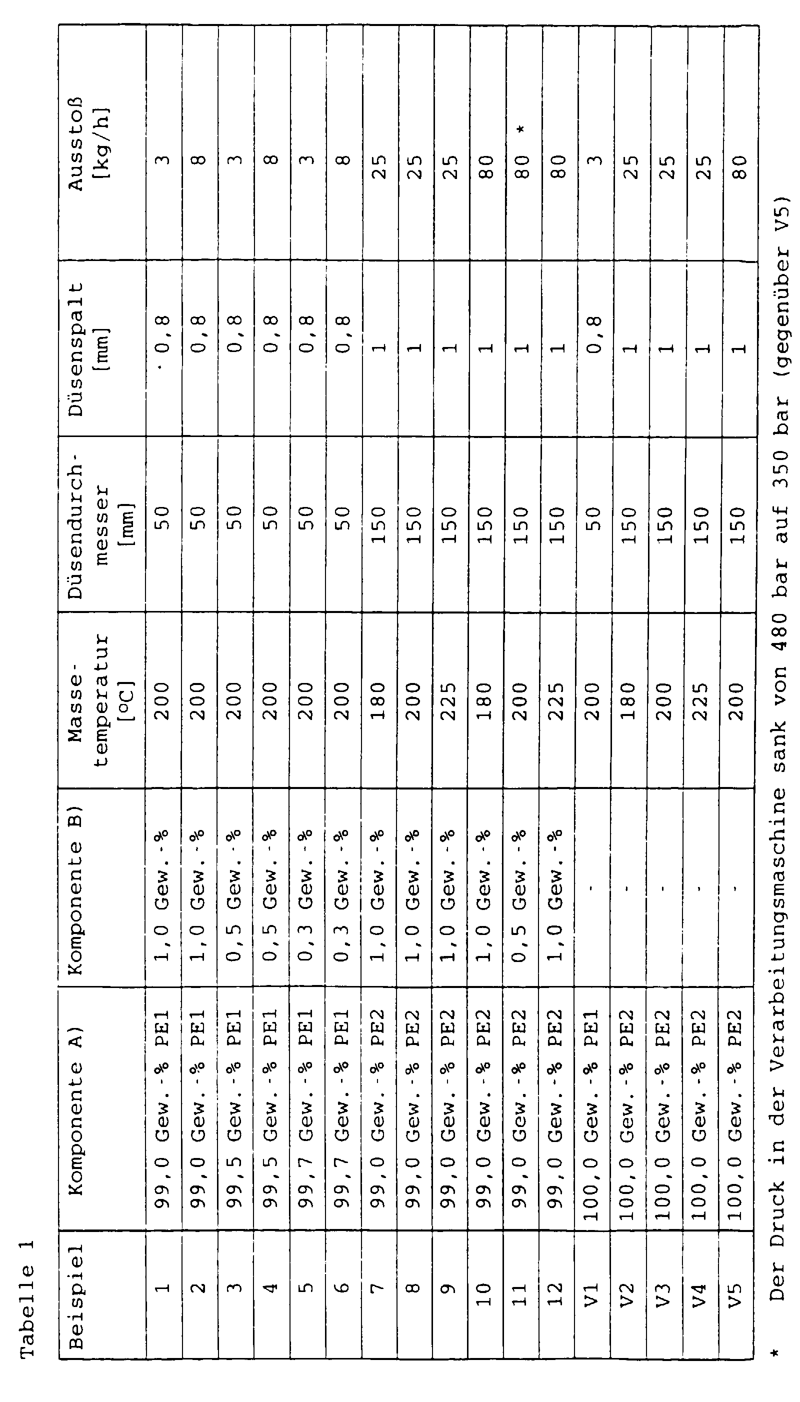

### Beispiel 13

### Herstellung von Flaschen

99 Gew.-% PE3 wurden mit 1 Gew.-% an B als Granulatmischung bei einer Massetemperatur von 200°C zu 300 ml Flaschen blasgeformt. Der Massedruck sank gegenüber einer Flasche aus 100 Gew.-% PE3 von 120 bar auf 105 bar.

Die Flaschen zeigten besseren Oberflächenglanz und die Prüfung der Spannungsrißbeständigkeit ergab eine um 20 % längere Standzeit gegenüber Flaschen aus 100 Gew.-% PE3.

### Beispiel 14

### Extrusion von Breitschlitzfolien

Auf einer Flachfolienanlage mit einer Breitschlitzdüse von 900 mm wurden 99,5 Gew.-% PE2 mit 0,5 Gew.-% B bei einer Massetemperatur von 260°C extrudiert. Selbst bei einem Ausstoß von 100 kg/h trat kein Schmelzbruch auf, während bei einer Folie aus 100 Gew.-% PE schon bei einem Ausstoß von 30 kg/h starker Schmelzbruch auftrat.

## Patentansprüche

1. Thermoplastische Formmassen, enthaltend als wesentliche Komponenten
A) 95 bis 99,99 Gew.-% eines Ethylenpolymerisats und
B) 0,01 bis 5 Gew.-% eines nicht flüssigkristallinen thermoplastischen Polyesters mit einem Schmelzmaximum von kleiner als oder gleich 150°C, wobei solche Formmassen, die mindestens ein Pigment in einer Menge, die ausreichend ist, um das Ethylenpolymerisat zu färben, enthalten, ausgeschlossen sind.

2. Thermoplastische Formmassen nach Anspruch 1, dadurch gekennzeichnet, daß als Komponente B) Polyester eingesetzt werden, die erhältlich sind durch Reaktion einer Mischung, enthaltend als wesentliche Komponenten
B1) 30 bis 60 Gew.-% einer Mischung, enthaltend als wesentliche Komponenten
B11) 30 bis 70 Gew.-% Adipinsäure, deren esterbildende Derivate oder Mischungen davon,
B12)30 bis 70 Gew.-% Terephthalsäure, deren esterbildende Derivate oder Mischungen davon und
B13) 0 bis 5 Gew.-% einer Verbindung mit mindestens drei zu Esterbildung befähigten Gruppen,
B2) 40 bis 70 Gew.-% einer Dihydroxyverbindung mit 2 bis 10 C-Atomen und
B3) 0 bis 5 Gew.-% Diisocyanate, Divinylether, 2,2'-Bisoxazoline oder Mischungen davon.

3. Verfahren zur Herstellung von thermoplastischen Formmassen gemäß den Ansprüchen 1 bis 2, dadurch gekennzeichnet, daß man die Komponenten A) und B) bei Temperaturen von 100 bis 350°C miteinander mischt.

4. Verwendung der thermoplastischen Formmassen gemäß den Ansprüchen 1 bis 2 zur Herstellung von Fasern, Folien und Formkörpern.

5. Fasern, Folien und Formkörper, erhältlich aus den thermoplastischen Formmassen gemäß den Ansprüchen 1 bis 2 als wesentliche Komponente.

## Claims

1. A thermoplastic molding material containing, as essential components,
A) from 95 to 99.99 % by weight of an ethylene polymer and
B) from 0.01 to 5 % by weight of a non-liquid-crystalline thermoplastic polyester having a maximum melting point of less than or equal to 150°C, where those molding materials which comprise at least one pigment in an amount which is sufficient to color the ethylene polymer are excluded.

2. A thermoplastic molding material as claimed in claim 1, wherein component B) used is a polyester which is obtainable by reacting a mixture containing, as essential components,
B1) from 30 to 60 % by weight of a mixture containing, as essential components,
B11) from 30 to 70 % by weight of adipic acid, the ester-forming derivatives thereof or a mixture thereof,
B12) from 30 to 70 % by weight of terephthalic acid, the ester-forming derivatives thereof or a mixture thereof and
B13) from 0 to 5 % by weight of a compound having at least three groups capable of ester formation,
B2) from 40 to 70 % by weight of a dihydroxy compound of 2 to 10 carbon atoms and
B3) from 0 to 5 % by weight of diisocyanates, divinyl ethers, 2,2'-bisoxazolines or a mixture thereof.

3. A process for the preparation of a thermoplastic molding material as claimed in claims 1 and 2, wherein the components A) and B) are mixed with one another at from 100 to 350°C.

4. Use of a thermoplastic molding material as claimed in claims 1 and 2 for the production of fibers, films and moldings.

5. Fiber, film or molding obtainable from a thermoplastic molding material as claimed in claims 1 and 2, as an essential component.

## Revendications

1. Matières à mouler thermoplastiques contenant, en tant que composants essentiels
A) 95 à 99,99 % en poids d'un polymère de l'éthylène et
B) 0,01 à 5 % en poids d'un polyester thermoplastique exempt de cristaux liquides, ayant un maximum de fusion inférieur ou égal à 150°C, sous réserve que les matières à mouler qui contiennent au moins un pigment en quantité suffisante pour colorer le polymère de l'éthylène sont exclues.

2. Matières à mouler thermoplastiques selon la revendication 1, caractérisées par le fait qu'elles contiennent en tant que composant B) un polyester obtenu par réaction d'un mélange contenant en tant que composants essentiels
B1) 30 à 60 % en poids d'un mélange contenant en tant que composants essentiels
B11) 30 à 70 % en poids d'acide adipique, ses dérivés estérifiables ou leurs mélanges,
B12) 30 à 70 % en poids d'acide tétéphtalique, ses dérivés estérifiables ou leurs mélanges,
B13) 0 à 5 % en poids d'un composé à au moins trois groupes estérifiables,
B2) 4 0 à 70 % en poids d'un composé dihydroxylé en C2-C10,
B3) 0 à 5 % en poids de diisocyanates, d'éthers divinyliques, de 2,2'-bisoxazolines ou leurs mélanges.

3. Procédé de préparation des matières à mouler thermoplastiques selon les revendications 1 à 2, caractérisé par le fait que l'on mélange les composants A) et B) entre eux à des températures de 100 à 350°C.

4. Utilisation des matières à mouler thermoplastiques selon les revendications 1 à 2 pour la fabrication de fibres, de feuilles et d'objets moulés.

5. Fibres, feuilles et objets moulés obtenus à partir des matières à mouler thermoplastiques selon les revendications 1 à 2 en tant que constituants essentiels.
